# EUROPEAN PATENT SPECIFICATION

(11) **EP 0 423 644 B1**
(45) Date of publication and mention of the grant of the patent: **26.01.1994**
(21) Application number: 90119613.9
(22) Date of filing: 12.10.1990
(51) Int. Cl.: F16L 33/26, F16L 33/24

(54) **A connector for a shower head**
Verbindungsstück für einen Brausekopf
Connecteur pour un arrosoir

(30) Priority: 14.10.1989 KR 8914955 U
(43) Date of publication of application: 24.04.1991
(73) Proprietor: AMERICAN STANDARD INC., New York, N.Y. 10036-7701 (US)
(72) Inventor: Joon, Hyo Shon, Kangseo-Ku, Seoul (KR)
(74) Representative: VOSSIUS & PARTNER

(56) References cited:
- DE-A- 2 401 035
- DE-A- 2 711 584
- DE-A- 3 509 231
- DE-B- 2 416 314

## Description

The present invention relates to an improvement of a connector for a shower head of a shower device which is connected to a water tap in a bath room, in use thereof.

A conventional connector for a shower head comprises a screw nipple in which an end of a hose is fitted, and a coupling nut fitted in a bushing directly connected to said screw nipple. The connection between the screw nipple and the bushing is accomplished by a fixing method utilizing a punching work. This method provides only a temporal fixture. After a long time use, the punched area tends to offset, so that the bushing may move in relation to the hose. In addition, there is a disadvantage of increase of the amount of poor products due to the severe punching work.

DE-B- 2 416 314 discloses a connector for a shower head comprising a band nipple, an inner hose, a screw nipple, an outer hose, a bushing fitting around said hoses, and a coupling nut enclosing said elements.

An object of the present invention is to overcome the above-mentioned disadvantage encountered in the prior art and to provide a connector in which a bushing and a screw nipple are perfectly connected.

This object is achieved by the connector according to the claim.
It is the gist of the invention to connect the bushing and the screw nipple by means of a lock ring mounted around said screw nipple.

The present invention will be described in detail in conjunction with the appended drawings in which
Fig. 1 is a partially-taken sectional view of a connector connected to a hose in accordance with the present invention;
Fig. 2 is an exploded perspective view of a screw nipple, a bushing, and a lock ring shown in Fig. 1; and
Fig. 3 is a view showing the use of the present invention.

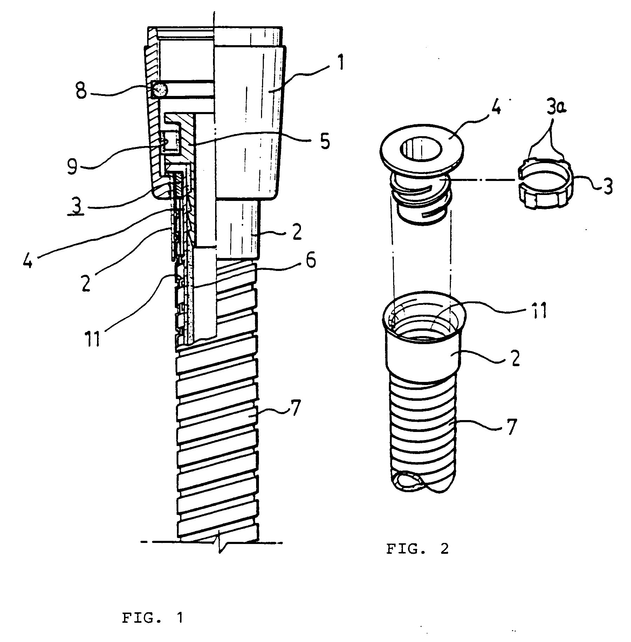

Referring to Fig. 1, there is shown a connector for a shower head in accordance with the present invention. The connector comprises a band nipple 5 in which a rubber hose 6 is inserted, a screw nipple 4 and a bushing 2 fitting around said rubber hose 6, and a coupling nut 1 enclosing said elements. In accordance with the present invention, the connector comprises a lock ring 3 having a plurality of protrusions 3a at the periphery thereof. The lock ring functions to firmly fix the bushing on an outer hose 7.

Reference numeral 8 designates an O-ring, and 9 a U-ring.

The connection of the flexible outer hose 7 to the inner rubber hose 6 is accomplished by turning and fitting the bushing 2 mounted on an end of the outer hose 7 around the screw nipple 4 connected to the rubber hose 6. That is, the outer hose 7 and the screw nipple 4 are firmly connected by threadedly connecting the screw nipple 4 to a thread portion 11 formed on the inner surface of the end of said outer hose 7. In accordance with the present invention, the lock ring 3 preferably made of synthetic resin is positioned around the lower end of the screw nipple 4.

Accordingly, when the outer hose 7 is connected with the screw nipple 4, the protrusions 3a of the lock ring 3 are in pressing contact with the end of the bushing 2 fitting around the outer hose 7. Thus, the firm connection can be accomplished between the screw nipple 4 and the outer hose 7 and between the outer hose 7 and the bushing 2. Consequently, the movement of the bushing can be prevented in use of the shower device. In maintenance, the bushing 2 can be separated from the screw nipple 4 in order to allow the desired area to be maintained. The present invention eliminates the necessity of an inconvenient work such as a conventional punching work for preventing the movement of the bushing, thereby causing the amount of poor products to be minimized. In addition, the present invention permits the assembly of the shower device to be simplified.

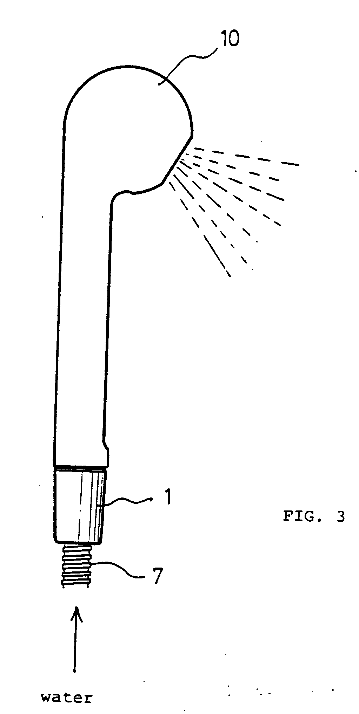

Referring to Fig. 3, there is shown the use of a shower device in which a shower head 10 is connected to the coupling nut.

## Claims

1. A connector for a shower head comprising a band nipple (5), an inner hose (6) connected to the band nipple (5), a screw nipple (4), an outer hose (7) connected to the screw nipple (4), a bushing (2) fitting around said hoses (6, 7), and a coupling nut (1) enclosing said elements,
characterised by
a lock ring (3) fitting around said screw nipple (4) and having a plurality of protrusions (3a) at the periphery thereof, said lock ring being adapted to firmly fix said bushing (2) on said outer hose (7).

## Patentansprüche

1. Verbindungsstück für einen Brausekopf (10) mit einem Verbindungsnippel (5), an dem ein innerer Schlauch (6) angeordnet ist, einem Gewindenippel (4), einem mit dem Gewindenippel (4) verbundenen äußeren Schlauch (7), einer um die Schläuche (6, 7) angeordneten Muffe (2) und einer diese Elemente umschließenden Kopplungsmutter (1), gekennzeichnet durch einen um den Gewindenippel (4) angeordneten Verriegelungsring (3) mit mehreren an seinem Umfang angeordneten Vorsprüngen (3a) zum festen Anbringen der Muffe (2) an dem äußeren Schlauch (7).

## Revendications

1. Connecteur pour pomme de douche, comprenant un raccord en forme de bande (5), un tuyau intérieur (6) relié au raccord en forme de bande (5), un raccord fileté (4), un tuyau extérieur (7) relié au raccord fileté (4), un manchon (2) installé autour desdits tuyaux (6, 7) et un écrou de couplage (1) enfermant lesdits éléments,
caractérisé par :
une bague de verrouillage (3) installée autour dudit raccord fileté (4) et présentant une pluralité de saillies (3a) sur sa périphérie, ladite bague de verrouillage étant adaptée pour fixer rigidement ledit manchon (2) sur ledit tuyau extérieur (7).
